(19) Europäisches Patentamt
European Patent Office
Office européen des brevets

(11) **EP 2 701 408 A1**

(12) **EUROPEAN PATENT APPLICATION**

(43) Date of publication:
**26.02.2014 Bulletin 2014/09**

(21) Application number: **12181759.7**

(22) Date of filing: **24.08.2012**

(51) Int Cl.:
*H04W 4/02* (2009.01)          *H04L 12/24* (2006.01)
*H04W 24/02* (2009.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **La Citadelle Inzenjering d.o.o.**
**21000 Novi Sad (RS)**

(72) Inventors:
• **Boskovic, Dragan**
  **Arandjelovac (RS)**

• **Tosic, Milenko**
  **?abalj (RS)**
• **Cirilovic, Mirko**
  **Rumenka (RS)**
• **Ikovic, Ognjen**
  **Novi Sad (RS)**

(74) Representative: **Wray, Antony John**
**Optimus Patents Limited**
**Grove House**
**Lutyens Close**
**Chineham Court**
**Basingstoke**
**Hampshire RG24 8AG (GB)**

(54) **Method and apparatus for managing a wireless network**

(57)     A wireless network management system is described. The wireless network management system is arranged to, upon detection of at least one trigger event within the at least one wireless network, create at least one opportunistic network overlay across a plurality of sub-networks within the at least one wireless network in response to the at least one detected trigger event.

400

FIG. 4

EP 2 701 408 A1

**Description**

Field of the invention

The field of this invention relates to a method and apparatus for managing a wireless network.

Background of the invention

The Internet has evolved to be the most significant information exchange medium, and is burdened with high expectations in terms of performance and support requirements for new applications and services. The capacity of the modern Internet infrastructure is mainly consumed by video traffic, which is a direct consequence of technological advances in video capturing and conditioning for consumption on personal and portable devices.

With the advent of large screen smart phones and tablets, video streaming to such mobile devices is becoming a dominant service for cellular networks, and its demand is such that it is stressing cellular network infrastructures. Conventionally, to cope with such growth in network resource demands requires costly upgrades into the core of wireless access networks that cellular operators are only too keen to avoid. As an alternative to such costly upgrades, cellular operators are looking into the possibility of creating IP (Internet Protocol) based network overlays based on inexpensive and now ubiquitously available wireless local area network (WLAN) technology.

Although WLANs provide easily deployable, maintainable and scalable Internet access, they are typically very fragmented (divided into sub-networks). Consequently, standard exploitation practices for providing wireless video content delivery are typically complex and ill prepared to handle the resource segregation and effectively address the wide range of temporal and spatial variations in wireless video demand. The situation is further exacerbated by the fact that WLAN underlays are, as with all other wireless networks, subject to interference due to the open nature of the wireless medium.

For the above mentioned reasons, there is a strong need for innovative ways to increase agility/responsiveness of WLAN network underlays, and improve overall capacity of such networks by efficient utilization of available wireless and computational resources.

Research in relation to wireless ad-hoc networks is often presented as applicable to wireless mesh networks (WMNs) related problems and vice versa. However, WMNs should be considered as a separate category, as supported by the development of the IEEE 802.11s standard explicitly dedicated to WMNs. The similarity between wireless ad-hoc and mesh networks comes from the fact that the nodes in both topologies are directly interconnected via multi-hop links, as outlined in [1] I. Akyildiz, X. Wang, W. Wang, "Wireless mesh networks: a survey," Elsevier Computer networks vol. 47, pp. 445-487, 2005, which is incorporated by reference herein. However, WMNs are also similar to WLANs due to the fact that gateway (GW) nodes connect mesh nodes onto the service provider IP infrastructure, as also outlined in [1]. Having borrowed specific networking features from both ad-hoc and WLAN topologies it is evident that WMNs, as such, require unique routing and resource management algorithms in order to preserve advantages over the other two categories.

The mobile ad-hoc networks tend to have a fluid topology. Reactive routing protocols such as Ad-hoc On-demand Distance Vector (AODV) (described in [2] C. Perkins, E. Belding-Royer, S. Das, "Ad hoc on-demand distance vector routing," IETF RFC 3561; 2003 which is incorporated by reference herein) and Dynamic Source Routing (DSR) (described in [3] D. Johnson, Y. Hu, D. Maltz, "The dynamic source routing protocol for mobile ad hoc networks for IPv4," IETF RFC 4728, 2007; which is incorporated by reference herein) are best suited for use in this situation since they limit the amount of control needed to operate traffic on such a network. These protocols are equally applicable to WMNs (as outlined in [4] Public deliverable, "D4.4 - Design and prototype implementation of QoS routing," EU-MESH, FP7 ICT no. 215320, 2010, and [5] Y. Yang, J. Wang, R. Kravets, "Designing routing metric for mesh networks," IEEE Workshop on wireless mesh networks, 2005; both of which are incorporated by reference herein).

In addition to its topology the management of WMNs also needs to be concerned with availability and utilization efficiency of the wireless back-haul resources. Load balancing technique with single path routing is still a dominant solution used for that purpose. Approaches proposed in [6] A. A. Pirzada, R. Wishart, M. Portmann,"Congestion aware routing in hybrid wireless mesh networks," IEEE International conference on networks ICON, pp. 513-518, 2007 and [7] A. A. Bhorkar, T. Javidi, A. Snoeren,"A practical approach for achieving congestion diversity in wireless ad hoc networks," Allerton conference on communication, control and computing, 2010 (both of which are incorporated by reference herein) address load balancing through congestion awareness of single path routing protocols. They introduce novel routing metrics calculated at each WMN node which are made load aware by inspection of queues at corresponding routers. In contrast, approaches presented in [4] (above) and approaches analyzed in [8] J. Tsai, T. Moors, "A review of multi path routing protocols: form ad hoc to mesh networks," presented at A review of multipath routing protocols: from wireless Ad Hoc to Mesh Networks, Sydney, July 2006 (incorporated by reference herein) propose multi-path routing as a load balancing technique. These solutions are based on reactive routing protocol where multiple paths are discovered and formed for every new flow in the network.

Opportunistic Networks (ONs) are formed across portable devices with the aim to exploit, in a temporary manner, the communication, computing or storage resources of neighbouring terminals in a specific service area. An extensive research description in respect to relevant algorithms and applications has been provided in [9] Conti, M., Giordano, S., May, M., Passarella, A.: From Opportunistic Networks to Opportunistic Computing. IEEE Communications Magazine vol. 48 no. 9 IEEE (2010) pp. 126-139; which is incorporated by reference herein.

The notion of operator-governed ONs is also introduced and elaborated in [10] EU grant no. FP7-ICT-257385 - OneFIT: Opportunistic Networks and Cognitive Management Systems for Efficient Application Provision in the Future Internet. Available online at: www.ict-onefit.eu, also incorporated by reference herein. In this approach, operators have the control of the ONs in their service area in order to decide on the creation, maintenance/reconfiguration or termination of an ON.

There is a wealth of academic papers on the subject of opportunistic network. General assumption in this academic work is that the underlying topology of opportunistic networks is highly dynamic since it is built across mobile user devices. Therefore establishing and maintaining end-to-end paths between such nodes is unfeasible, and for that reason the communication services offered over opportunistic networks have to be delay tolerant. A good source of prior art is http://en.wikipedia.org/wiki/Routing_in_delay-tolerant_networking.

There is also an academic paper, [11] Pan Hui, Anders Lindgren, Jon Crowcroft, "Empirical Evaluation of Hybrid Opportunistic Networks", available at http://www.cl.cam.ac.uk/-ph315/publications/hybrid.pdf, and incorporated by reference herein, that proposes a hybrid approach to the opportunistic networks, by which some infrastructure nodes (e.g. access points) are added to the mix of user/mobile devices in order to improve the delay performance of the data services offered over such an opportunistic network.

However, none of the above proposals fully address cellular operators' requirements for creating IP based network overlays based on WLAN technology that are able to adequately improve the overall capacity of such networks by efficient utilization of available wireless and computational resources..

Summary of the invention

Accordingly, the invention seeks to mitigate, alleviate or eliminate one or more of the abovementioned disadvantages singly or in any combination.

In accordance with a first aspect of the invention, there is provided wireless network management system arranged to, upon detection of at least one trigger event within at least one wireless network, create at least one opportunistic network overlay across a plurality of sub-networks within the at least one wireless network in response to the at least one detected trigger event.

In one optional embodiment, the wireless network management system may be arranged to create at least one opportunistic network overlay across a plurality of sub-networks within the at least one wireless network upon detection of at least one trigger event comprising at least one from a group comprising: at least one detected pattern in a network behaviour within the at least one wireless network; at least one contextual parameter exceeding a predefined threshold value; a current network status for at least a part of the wireless network; and at least one resource request from at least one end user device.

In one optional embodiment, the wireless network management system may be arranged to, upon detection of at least one trigger event within the at least one wireless network, determine a suitability of the creation of an opportunistic network overlay in response to the at least one detected trigger event, and to create at least one opportunistic network overlay across a plurality of sub-networks within the at least one wireless network in response to the at least one detected trigger event if it is determined that such an opportunistic network overlay is suitable.

In one optional embodiment, the wireless network management system may be arranged to determine the suitability of the creation of an opportunistic network overlay based at least partly on at least one from a group comprising: a traffic type; a topology of the at least one wireless network; and a determination of an availability of a suitable multipath configuration.

In one optional embodiment, the wireless network management system may be arranged to determine an availability of a suitable multipath configuration based at least partly on: identifying at least one bottleneck link within at least one existing path within the at least one wireless network; and deriving a set of candidate opportunistic paths comprising link disjoint with respect to the at least one identified bottleneck link.

In one optional embodiment, the wireless network management system may be arranged to determine an availability of a suitable multipath configuration further based at least partly on identifying whether at least one candidate opportunistic path from within the derived set of candidate opportunistic paths comprising link disjoint paths with respect to the at least one identified bottleneck link satisfies at least one quality of service criteria.

In one optional embodiment, the wireless network management system may be arranged to determine an availability of a suitable multipath configuration further based at least partly on identifying whether at least one candidate opportunistic path from within the derived set of candidate opportunistic paths comprising link disjoint paths with respect to the at least one identified bottleneck link satisfies at least one quality of service criterion from a group of quality service criteria comprising:

- a path delay parameter for the candidate opportunistic path is less than a timing constraint threshold value;
- a path probability parameter for the candidate opportunistic path is greater than a probability threshold value;

- a combined bandwidth capacity of the candidate opportunistic path and the existing path comprising the bottleneck link is greater than a required bandwidth; and
- a penalty count parameter for the candidate opportunistic path is less than a penalty count threshold value.

In one optional embodiment, the wireless network management system may be arranged not to create an opportunistic network overlay in response to the detection of the at least one trigger event if no suitable candidate opportunistic path is available.

In one optional embodiment, the wireless network management system may be arranged to create at least one opportunistic network overlay across a plurality of sub-networks within the at least one wireless network by configuring at least one wireless network node to create at least one opportunistic bridging link between a plurality of sub-networks within the at least one wireless network.

In one optional embodiment, the wireless network management system may be arranged to, upon cessation of the at least one detected trigger event, terminate the respective at least one opportunistic network overlay from the wireless network.

In one optional embodiment, the wireless network management system may be further arranged to gather and analyse contextual data from across the at least one wireless network.

In one optional embodiment, the contextual data may comprise at least one from a group comprising: spatial and temporal user request distribution; and traffic patterns within the at least one wireless network.

In accordance with a second aspect of the present invention, there is provided a wireless network system comprising at least one wireless network management system according to the first aspect of the invention.

In accordance with a third aspect of the present invention, there is provided a method of managing a wireless network, the method comprising, upon detection of at least one trigger event within at least one wireless network, creating at least one opportunistic network overlay across a plurality of sub-networks within the at least one wireless network in response to the at least one detected trigger event.

In accordance with a fourth aspect of the present invention, there is provided a non-transitory computer program product having executable program code stored therein for programming signal processing logic to perform the method of the third aspect of the invention.

These and other aspects, features and advantages of the invention will be apparent from, and elucidated with reference to, the embodiments described hereinafter.

Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified block diagram of an example of (at least a part of) a wireless mesh network (WMN) system.
FIG. 2 illustrates a simplified block diagram of an example of a WMN management system.
FIG. 3 illustrates a simplified block diagram of an example of a WMN node.
FIG's 4 to 7 illustrates simplified flowcharts of an example of a method of managing a WMN.

Detailed description

The present invention will now be described with reference to one example embodiment comprising a method and apparatus for managing a wireless mesh network (WMN) arranged to create at least one opportunistic network overlay across a plurality of sub-networks within the WMN in response to the at least one detected trigger event. However, it will be appreciated that the present invention is not limited to the specific embodiment herein described and illustrated in the accompanying drawings. In prarticular, it will be appreciated that the invention is not limited to a WMN implementation, and may equally be implemented across alternative forms of heterogeneous wireless networks. For example, in some alternative embodiments, an opportunistic network overlay may be created across, say, cellular and WLAN networks. Furthermore, because the illustrated embodiments of the present invention may for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

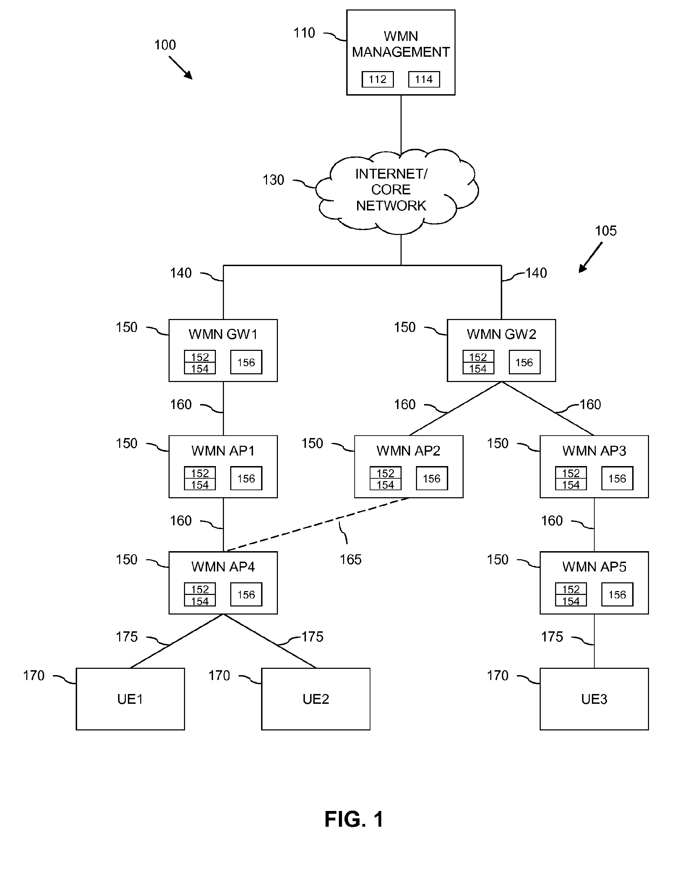

Referring first to FIG. 1, there is illustrated a simplified block diagram of an example of (at least a part of) a wireless mesh network (WMN) system 100. In the illustrated example, the WMN system 100 comprises a WMN 105 to which end user devices 170 are able to connect. In the illustrated example, the WMN 105 is operably coupled to the Internet or other form of core network infrastructure, as illustrated generally at 130. In this manner, end user devices 170 are able to connect to the Internet/core network 130 via WMN 105.

The WMN 105 comprises a plurality of nodes, indicated at 150. In the illustrated example, each WMN node 150 comprises at least one signal processing module 152 for executing computer program code thereon; at least one memory element 154 for storing therein computer program code to be executed and/or for storing data content etc; and at least one wireless transceiver module 156 for enabling wireless communication with one or more further WMN nodes 150 and one or more end user devices 170. The WMN nodes 150 may be arranged into one or more 'clusters'. For example, in the illustrated example, the WMN nodes 150 are arranged into two clusters; a first cluster comprising a first WMN node GW1 150 configured as a gateway (GW) node and two further WMN nodes AP1, AP4 150 configured as WMN access point (AP) nodes; and a second cluster comprising a first WMN node GW2 150 configured as a GW node and three further WMN nodes AP2, AP3, AP5 150 are configured as WMN AP nodes.

In the first cluster, the GW node GW1 is operably coupled to the Internet/Core network 130, via a cable connection such as a broadband connection 140 or the like. Wireless backhaul links 160 are configured between GW1 and AP1, and between AP1 and AP4. In the second cluster, the GW node GW2 is also operably coupled to the Internet/Core network 130 via a broadband connection 140 or the like. The AP nodes in the second cluster are further arranged into two sub-clusters. The first sub-cluster comprises AP node AP2, with a wireless backhaul link 160 being configured between GW2 and AP2. The second sub-cluster comprises AP3 and AP5, with wireless backhaul links 160 being configured between GW2 and AP3, and between AP3 and AP5. In this manner, each AP node is connected to the Internet/core network 130 via a respective GW node GW1/GW2. As such, the AP nodes may be considered to be configured as 'single-homed' nodes, since they are connected to the Internet/core network 130 via a single GW node.

The WMN system 100 further comprises a WMN management system 110. In the illustrated example, the WMN management system 110 comprises one or more processing units, such as illustrated generally at 112, arranged to execute computer program code. Such computer program code may be stored within one or more non-transitory computer program products, for example as illustrated generally at 114 in FIG. 1. As used herein, the expression non-transitory will be understood to refer to the non-ephemeral nature of the storage medium itself rather than to a notion of how long the stored information itself may persist in a stored state. Accordingly, memories that might otherwise be viewed, for example, as being volatile (such as many electronically-erasable programmable read-only memories (EPROM's) or random-access memories (RAM's)) are nevertheless to be viewed here as being 'non-transitory' whereas a signal carrier in transit is to be considered 'transitory' notwithstanding that the signal may remain in transit for a lengthy period of time.).

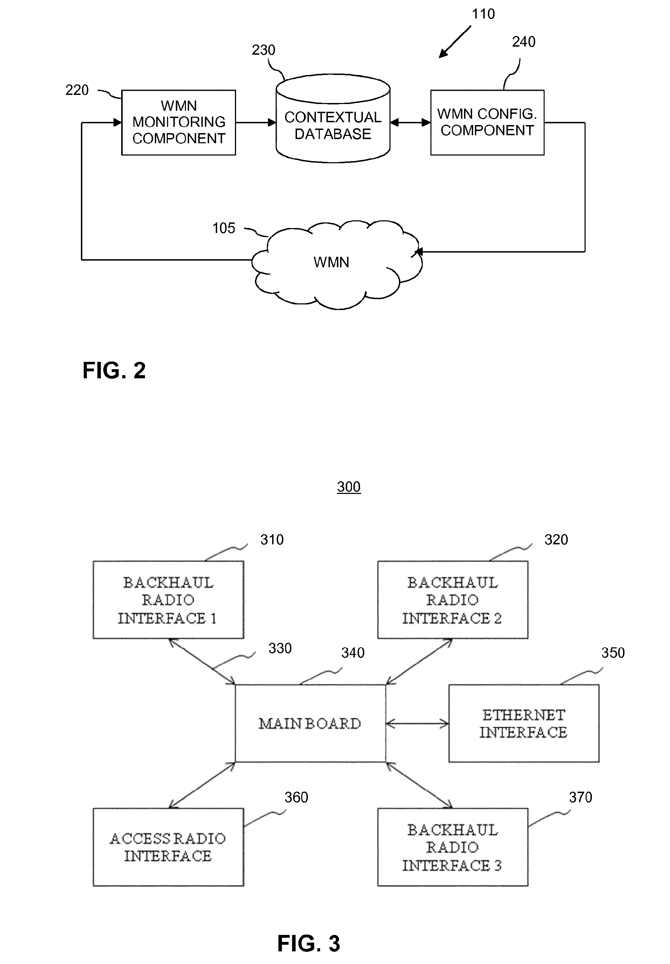

FIG. 2 illustrates a simplified block diagram of an example of the WMN management system 110. In the illustrated example, the WMN management system 110 comprises a context aware WMN management system comprising a WMN monitoring component 220 arranged to collect necessary contextual data from across the WMN 105, and stores such collected contextual data within a contextual database 230. In this manner, the contextual database 230 stores historical values of contextual parameters. The WMN management system 110 further comprises a WMN cognitive management component 240 arranged to perform knowledge derivation based on contextual data stored within the contextual database 230 and store such derived contextual knowledge within the contextual database 230. As such, in other examples, the cognitive management component 240 may be considered as performing as a management component, a context aware management component, an autonomic intelligence component or the like. The WMN cognitive management component 240 is further arranged to dynamically configure opportunistic overlays within the WMN 105, upon detection of certain trigger events, as described in greater detail below.

FIG. 3 illustrates a simplified block diagram of an example of a WMN node 170. A typical WMN deployment consists of wireless mesh routers, such as the wireless mesh router 300 illustrated in FIG. 3, which may be configured to act as wireless Access Points (APs) for radio enabled end user devices. A commonly used access interface is based on the IEEE 802.11 standard, which is also used to create backhaul links between such WMN APs to mesh the wireless routers within the given WMN constellation in order. Besides acting as access points and wireless routers, some of the WMN nodes may also act as gateways (GWs) to, for example, the Internet or other core network 130, such as GW1 and GW2 in FIG. 1, in order to transport data traffic to and from servers residing outside the WMN. In this manner, WMNs are able to provide wide area coverage and necessary access capacity with only a few nodes directly connected to an external IP network. Moreover, a mesh topology provides great flexibility, reliability and fault tolerance through its ability to auto-reconfigure and self-heal. Therefore, WMNs have been proposed as a technology which provides economical and easily deployable and maintainable access to core network services.

The biggest challenge facing multi-hop wireless networks, such as WMNs, is poor bandwidth utilization which consequently decreases total capacity of the network. The root cause of poor bandwidth utilization efficiency is the fact that both access and backhaul channels use the same shared medium. The problem is further amplified by congregation of traffic towards a few GWs within an overall constellation, and by radio interferences (intra and inter-flow) on multi-hop wireless transmissions. As the wireless backhaul bandwidth is in limited supply, it is not uncommon for the access capacity of a mesh router to exceed capacity of the backhaul path. Since traffic in WMNs is directed to and from GWs, backhaul links closer to these nodes have a greater chance of becoming congested. Also, nodes further from the WMN GWs are most likely to suffer from lack of backhaul bandwidth. Especially prone to backhaul bandwidth shortage are the so called leaf nodes in the mesh topology. These are the nodes on the edge of a WMN.

A properly constructed WMN requires that every node in the topology can connect to at least two other nodes in order to provide fault tolerance. Also, good engineering practice is to construct a topology which will provide paths to more than one GW for every AP. Such topologies provide great path diversity for the wireless backbone of WMNs. This diversity forms a solid ground for specific load balancing and multi-path routing schemes, which can boost performance of the underlying WMN and ensure the highest level of bandwidth utilization in the wireless backhaul.

By gathering and analyzing contextual data across multiple wireless networks, relevant for the backhaul and access links' operations, it is possible to understand behavioural patterns of the WMN and to detect potential problems within the networks before they become acute. Based on these behavioural patterns which act as triggers, an informed decision may be taken whether or not to create an opportunistic network across multiple clusters within the WMN. An opportunistic network provides means for aggregation of available and otherwise dormant network resources across WMN clusters, and proactively deploying these resources towards eliminating (or minimizing) impact of anticipated performance issues.

In addition, the use of such opportunistic networks within the WMN can increase the cost efficiency, due to the fact that an operator will not have to invest in expensive infrastructure upgrades in order to meet temporary load surges. Such opportunistic networks (ONs) can be operator-governed, temporary (i.e., for the time frame necessary to support particular network services as requested in a specific location and time), with multiple coordinated ON overlays for the underlying WMN infrastructure providing the ability to accommodate required user applications. The ON overlays may be dynamically created, through operator spectrum/ policies/ information/knowledge, in places and at the time they are needed with a goal of providing context aware management of available networking resources.

A given wireless mesh infrastructure is commonly an assembly of multiple branches, and as such is a composite wireless structure for which we can say to consists of multiple wireless networks (clusters). A routing protocol creates backhaul paths among WMN nodes based on current values of selected routing metrics. Also, backhaul path options are constrained by the WMN topology. Taking into account WMN topology and maximal allowed number of router hops (wireless backhaul links) on backhaul paths, all possible backhaul paths configuration possibilities can be calculated. In practice, a WMN infrastructure is divided into clusters of WMN nodes where every cluster is defined by the serving GW. Thus, for the example illustrated in FIG. 1, the WMN 100 comprises two clusters, the first cluster being defined by GW1 and the second cluster being defined by GW2. Every cluster represents one wireless network since it is created by the underlying routing protocol based on current values of parameters which are taken into account for routing metric calculation. As described about, FIG. 1 shows WMN 100 which has two clusters. One cluster consists of GW1, AP1 and AP4, and the respective backhaul links 160. This wireless network (cluster) provides access to Internet and/or core network services 130 for a first end user device UE1 and a second end user device UE2. The other wireless network (WMN cluster) consists of GW2, AP2, AP3 and AP5 and the respective backhaul links 160. These two wireless network clusters have limited resources which can be offered to the end user devices 170. If one of the wireless network clusters has to serve a high number of end user devices 170, which generate a high load on the respective backhaul links 160, while there are other cluster experiences little congestion, a practical way to provide sharing of available bandwidth resources among these network clusters is to create an opportunistic network overlay, which will bridge the network clusters.

For example, and as illustrated in FIG. 1, such an ON overlay may comprise of AP4 and AP2 being configured to create an opportunistic bridging link 165 between the two, above identified, WMN clusters. In this manner, a better load balancing between the two network clusters can be achieved, which results in a higher level of bandwidth utilization and, consequently, overall increase in capacity of the underlying WMN 105. Without support for creation of this bridging opportunistic network, the only way to achieve better load balancing and related benefits would be reconfiguration of existing networks (tearing down existing backhaul paths and the creation of new ones). In today's wireless networks, end users are highly mobile, and therefore unpredicted changes in their request distribution should be expected. If every such change in request distribution resulted in the reconfiguration of the WMN 105, the network, and service which it provides, would become very unstable and unreliable. This is not allowed in today's effort to provide a carrier class of services over WMNs. Therefore, ability to provide cooperative and opportunistic resource sharing among existing WMN clusters is a very desirable feature of future WMN management systems

To this end, and in accordance with some example embodiments of the present invention, the WMN management system 110 is arranged to, upon detection of at least one trigger event within the WMN 105, create at least one opportunistic network overlay across a plurality of sub-networks (e.g. clusters) within the WMN 105 in response to the at least one detected trigger event. For example, the WMN management system 110 may be arranged to create at least one opportunistic network overlay across a plurality of sub-networks within the at least one WMN by configuring at least one WMN node to create at least one opportunistic bridging link between a plurality of sub-networks within the at least one WMN.

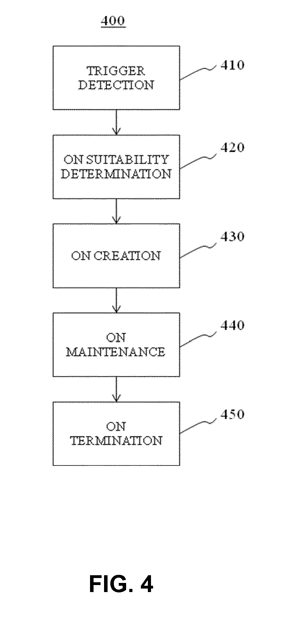

FIG. 4 illustrates a simplified flowchart 400 of an example of a method of managing a WMN network, such as may be implemented within the WMN management system 110 of FIG's 1 and 2. The method starts at 410 with the detection of a trigger event. Such trigger events may indicate the need for the creation of an opportunistic network overlay, for example for the purpose of backhaul resource aggregation across two or more WMN clusters. Such trigger events may comprise, for example, one or more detected patterns in a network behaviour within the WMN 105, one or more contextual parameters exceeding predefined threshold values, a current network status for at least a part of the WMN 105, one or more requests for (additional) resources from one or more end user devices 170, etc.

In some examples, time stamped data values of contextual parameters, stored within the contextual database 230 by the monitoring component 220 of the WMN management system, may be subject to machine learning algorithms executed by the WMN cognitive management component 240, which detect network behavioural patterns as well as excessive values of relevant contextual parameters. The set of monitored contextual parameters may comprise, but is not limited to, spatial and temporal user request distribution, and traffic patterns within the WMN 105. Spatial and temporal user request distribution contextual parameters may be derived from, say, geo-location and time-stamp data reflecting from where and when the users are most likely to request services. The traffic patterns (especially traffic patterns in the back-haul links of the WMNs) may be in line with user request distribution (e.g. reoccurring interference can trigger reconfiguration of the channel assignments which may be to a high degree de-correlated from the user behaviour).

By inspection of user mobility/migration patterns, traffic flows and application/service mix, a need for increased bandwidth capacity at access side of an access point may be detected or predicted if similar situations have already been encountered. Knowledge of reoccurring patterns relative to users mobility, traffic flows and application/service requests, significantly improve the predictive ability of the management system. The history of contextual data, representing different WMN states and their transitional rules (how WMN goes from one to the other detected state), is extremely beneficial for successful pattern recognition and therefore for successful predictions which improves performance of the decision making process.

Derived patterns may be further processed by means of machine learning algorithms in order to recognise potentially problematic situations of congestion in certain parts of the network, or situations in which user request distribution result in increased load in certain parts of the network which causes stress on the available resources. Such problematic situations may be used as trigger events, upon the detection of which the WMN management system 110 may be arranged to create an opportunistic network overlay across a plurality of sub-networks (e.g. clusters) within the WMN 105.

In some examples of the present invention, trigger events may also be reactive. For example, the WMN 105 may be constantly monitored by the WMN management system 110, on the basis of current and historical contextual data gathered and stored within the contextual database 230. The WMNs management system 110 may comprise a set of predefined threshold levels for selected contextual parameters such as, by way of example only:

　　i. load over wireless links;
　　ii. number of lost packets on links (ETX metric value);
　　iii. delays over wireless links; and
　　iv. jitter over wireless links and SINR (signal to interference and noise ration) of channels used for establishing the wireless links.

If some of these parameters meet their threshold values, a trigger event may be deemed to have been detected.

In some example embodiments, the detection of a trigger event may comprise a quality of service (QoS) centric approach in line with an admission control paradigm for wireless networks. According to such admission control techniques, a new traffic flow may be admitted to the network only if its admission does not have a negative effect on existing flows and current operational status of the network. New users connecting to the wireless network and sending request for services or existing user requesting new service (starting new application session) are considered to be the requests for additional flow in the network. When the status of the WMN 105 allows for additional flows in respect of supported service profiles, these requested flows may be automatically allowed into the network. However, if the current status of the WMN does not allow for new flows of a certain profile (i.e. high definition video streaming) to be allowed, a request for such a new flow may comprise a trigger event.

Referring back to FIG. 4, upon detection of a trigger event, the method moves on to step 420, where in the illustrated example, a suitability determination phase is performed in order to check whether or not the problematic situation associated with the detected trigger event can be handled by an opportunistic network overlay. Assuming a positive suitability determination is achieved (as described in greater detail below), the method moves on to step 430, with the creation of an opportunistic network overlay. The created opportunistic network overlay is then monitored, at step 450, and eventually terminated at step 460, for example upon cessation of the at least one detected trigger event and/or after the need for aggregated backhaul traffic ceases to exist and the corresponding router(s) may be return into single path mode of operation.

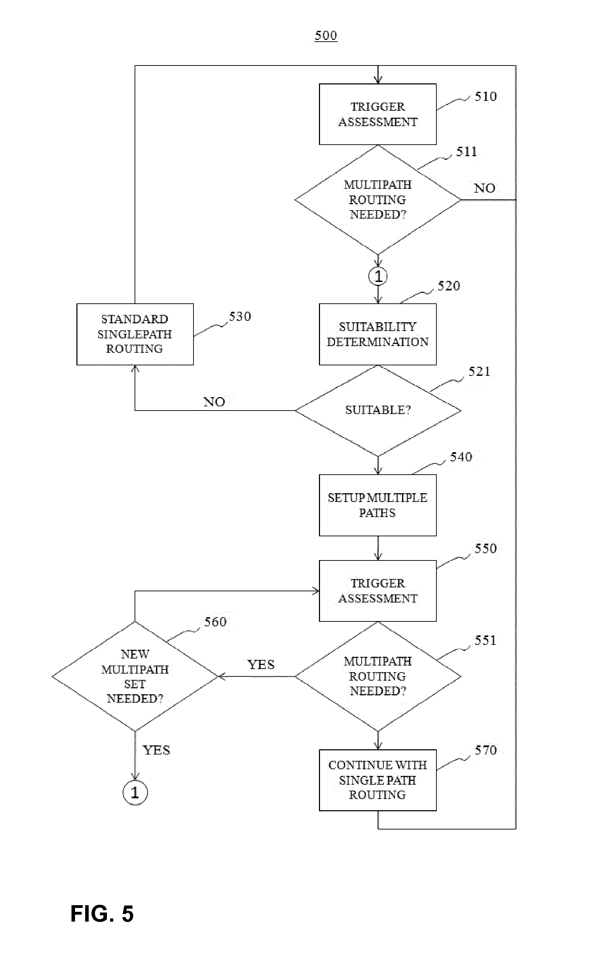

FIG. 5 illustrates a simplified flowchart 500 of an example of a method of performing such suitability determination, and performing such opportunistic network overlay creation, monitoring and termination. The algorithm 500 presented in FIG. 5 makes a decision whether or not to create an opportunistic network for providing multi-path routing as a solution for the problem associated with the detected trigger event. Besides having responsibility to decide when to implement the multi-path routing, the algorithm also selects the candidate nodes to participate in the opportunistic network creation. The net effect of opportunistic backhaul bandwidth aggregation is to match the access bandwidth of modern wireless technology with the adequate transport bandwidth in the backhaul/core network. In some example embodiments, the proposed solution makes use of OLSR (Optimised Link State Routing), an IP routing protocol optimized for mobile ad-hoc networks, as the underlying routing protocol in the WMN 105. Necessary contextual data is gathered from WMN nodes 160 by way of, for example, the Simple Network Monitoring Protocol (SNMP), an Internet-standard protocol for managing devices on IP networks.

In the example illustrated in FIG. 2, the monitoring component 220 may monitor network status/state with the SNMP protocol and stores gathered contextual data into contextual database 230. This database contains current and historical contextual data as well as history of previous decision instances. The SNMP is used for gathering not only contextual data, but also OLSR routing tables from which a complete network graph may be constructed. This network graph may be complemented with two weight coefficients. One weight coefficient may represent probability of link failure for particular link, which may be derived from link set up history and packet loss rate. The second weight coefficient may correspond to detected delay on a particular link. In this manner, every link in the WMN 105 may be represented as *l(s, d, p, t),* where parameters in brackets represent source node, destination node, average probability of a link failure and average packet transfer delay respectively. The network graph may also be inspected in order to detect all possible loop-free paths from every WMN AP to every GW. Loop free paths are important for network routing in order to ensure stability and performance of the routing algorithm, as they ensure that a given packet will not originate from and then sink into the same node.

All links that are allowed within the WMN topology may be added to the network graph, and such graph may be used for calculation of all paths where a WMN AP is on one end and all reachable GWs are on the other (this may be done for every WMN AP). For this purpose it is important to limit the number of hops (wireless links), subject to the WMN graph size, for each calculated path in order to control the processing time. Furthermore, if the paths are too long, it can result in increased interference, severe packet losses and unacceptable delay performance.

Calculation of all paths may be done only once for each of the managed WMNs, and accommodated on a centralized management server (not shown). The paths should be recalculated if the WMN topology changes by adding new nodes, introducing new GWs, or by removing some nodes/GWs. In the database 230 of the WMN management system 110, a table may be created in which its entries correspond to each and every possible WMN backhaul link (whether or not currently configured). Every link may have an attribute showing for which of the backhaul paths that particular link is used. This attribute helps to determine whether or not two paths are link disjointed. Information regarding link disjointed multiple paths is important when these paths are used as a solution for a problem which is a result of congestion on a particular link (i.e. to avoid bottleneck links). Capacity of a backhaul path is limited by its most congested link. Different routing paths may share different backhaul links. When additional path needs to be found in order to help the existing one by providing additional resources it is important that this new path does not contain the bottleneck link of the existing path.

Referring back to FIG. 5, the algorithm 500 starts at step 510 with assessing the detected trigger, for example to determine whether an actual problem exists in relation to that trigger that may be solved, or at least partially alleviated, by way of the creation of a multi-path route (i.e. an opportunistic network overlay). If, at step 511, it is determined that multi-path routing is not required, the method moves on to step 530 where the current, standard single path routing is maintained. However, if it is determined that multi-path routing is required, the method moves on to step 520 where suitability determination is performed.

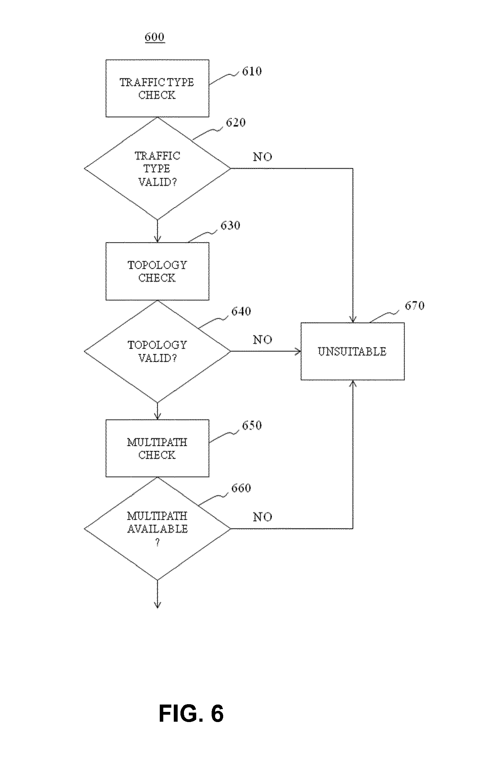

FIG. 6 illustrates a simplified flowchart of an example of a method for performing such suitability determination. In the illustrated example, the suitability determination phase is composed of three tasks performed in sequence. The first task comprises traffic examination 610 with aim of determining which type of access traffic is responsible for the backhaul congestion resulting in the detected trigger event. For example, let us define four types of traffic:

- *type 1* represents the case where all of the access traffic belongs to one user who is using one application which is sensitive to packet reordering and jitter (i.e. VoIP, live video streaming, etc.);
- *type 2* represents the use case where all of the access traffic belongs to one user who is using one application which is not sensitive to problems which may arise from transferring packets over multiple paths (i.e. download);
- *type 3* is the case where access traffic is generated by one user who is using several independent applications; and
- *type 4* is the case in which access traffic is generated by a number of users.

Should the access traffic examination classify the access traffic responsible for the backhaul congestion to be of *type 1*, then multi-path routing may be considered as an inappropriate solution and the traffic type 'invalid' from a multi-path routing perspective, since multi-path routing is likely to cause packet reordering and increased jitter. For the other three types, multi-path routing may be an appropriate solution to the backhaul congestion, with such traffic types being 'valid' from a multi-path routing perspective.

Thus, referring back to FIG. 6, if the traffic type is determined to be 'invalid' from a multi-path routing perspective at 620, the method moves on to 670, and determines that the creation of an opportunistic network overlay to provide a multi-path routing solution is inappropriate. Conversely, if the traffic type is determined to be 'valid' at 620, the method moves on to the second task at 630, which comprises a topology check. The goal of this topology check is to determine whether or not the given WMN topology allows for multiple paths to be formed in order to relieve the backhaul congestion resulting in the detected trigger event. For example, should the backhaul congestion resulting in the detected trigger event exist within a backhaul link between a leaf node and a sole neighbouring node to that leaf node, multi-path routing, to avoid the bottleneck link between that leaf node and its sole neighbour, would not be possible. Under such circumstances, a topology check would determine that multiple paths would not be allowed or possible to relieve the backhaul congestion.

Thus, referring back to FIG. 6, if it is determined that multiple paths would not be allowed/possible to relieve the backhaul congestion at 640, the method moves on to 670, and determines that the creation of an opportunistic network overlay to provide a multi-path routing solution is inappropriate. Conversely, if it is determined that multiple paths would be allowed/possible to relieve the backhaul congestion at 640, the method moves on to the third task 650, which comprises a check on whether or not an appropriate path can be found, which would, in addition to the existing path, provide aggregation of the available backhaul bandwidth. A backhaul path is a collection of WMN nodes and interconnecting backhaul links through which the traffic is routed. Therefore, the multiple path check performed at 670 is in fact a process of finding the subset of WMN nodes which may be used for ON overlay creation in order to achieve resource sharing/aggregation through multi-path routing.

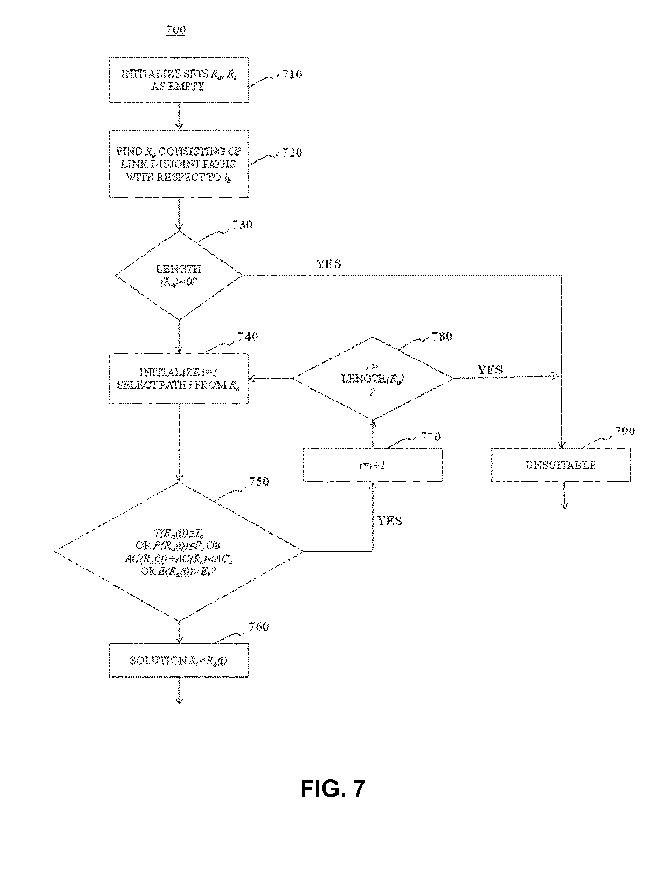

FIG. 7 illustrates a simplified flowchart 700 of an example of a method of performing such a multiple path check. First, let us define some system parameters:

- $AP_i$ represents an access point of the WMN 105 that is in need of additional backhaul bandwidth
- $R_i$ is the set of all possible paths from $AP_i$ to all available GWs within the WMN 105
- $R_i(j)$ is the $j^{th}$ path in the set $R_i$
- $L(R_i(j))$ is the set of links $l$ which form the path $R_i(j)$

- $N(R_i(j))$ is the number of links in path $R_i(j)$. Quality of the path $R_i(j)$ is defined with
- $P(R_i(j))$ is the probability of path $R_i(j)$, which depicts the path's ability to successfully transmit a packet over all links of which that path comprises, calculated as $\prod_{i=1}^{i=N(R_i(j))}(1-p_i)$ (where $p_i$ is failure probability of a link $l_i$)

- $T(R_i(j))$ is the total delay on path $R_i(j)$, determined as

$\sum_{i=1}^{i=N(R_i(j))} t_i$ (where $t_i$ is delay on a link $l_i$)

- $f_i$ is a total current flow over the link $l_i$, which is determined as sum of the number of inbound and outbound packets of one interface forming a link in time interval of 1 sec
- $b_i$ is the transmission rate achievable over a link $l_i$ which is determined by the measured SINR (signal to interference and noise ratio) level and 802.11 SINR threshold requirements
- $ac_i$ is available bandwidth capacity over a link $l_i$ which can be approximately estimated as $b_i$-$f_i$
- $AC(R_i(j))$ is the available bandwidth capacity of a path $R_i(j)$, which is equal to $min\{ac_i\}$ of all links of a path $R_i(j)$ (thus indicating a bottleneck link in a path)
- $R_c$ is the existing path used by OLSR for transferring traffic from $AP_i$ to the currently selected GW
- $R_a$ is the set of candidate paths for adding to the existing path $R_c$ for the backhaul bandwidth aggregation
- $R_s$ is a path selected for providing aggregation of backhaul bandwidth together with the existing path $R_c$
- $l_b$ is a bottleneck link in $R_c$ with the minimum value for $ac_i$ (which may be 0 if the link is completely congested)
- $E(R_i(j))$ is a penalty count for the path $R_i(j)$
- $T_c$ is a QoS dictated delay constraint for paths
- $P_c$ which is a QoS constraint for path probability (determined by the number of packet drops on a path)
- $AC_c$ defines bandwidth which is needed at the access side of the $AP_i$ in order to address the detected/predicted request (it is limited by the maximal transmission rate of the access technology which is typically 802.11g)
- $E_t$ is a penalty threshold

Referring back to FIG. 7, this part of the method starts at 710, where the parameters $R_a$ and $R_s$ are initialised to be empty. Next, at step 720, $R_a$, the set of candidate paths for adding to the existing path $R_c$ for the backhaul bandwidth aggregation, is created comprising those paths within $R_i$ (the set of all possible paths from $AP_i$ to all available GWs), that are link disjointed with respect to the bottleneck link $l_b$. If, at step 730, $R_a$ is empty (i.e. no paths from $AP_i$ to a GW that are link disjointed with respect to the bottleneck link $l_b$ are available), the method moves on to step 790, and it is determined that no multi-path routing options are available. Conversely, if $R_a$ comprises at least one path from $AP_i$ to at least one GW that is link disjointed with respect to the bottleneck link $l_b$, the method moves on to step 740, where $i$ is initialised to 1, and path $R_a(i)$ is selected. Next, at 750, it is determined whether the selected path $R_a(i)$ satisfies at least one QoS criterion. In particular in the illustrated example, it is determined whether the path $R_a(i)$ satisfies the QoS criteria:

- $T(R_i(i)) < T_c$
- $P(R_a(i)) > P_c$
- $AC(R_a(i)) + AC(R_c) \geq AC_c$
- $E(R_a(i)) < E_t$

If the selected path $R_a(i)$ satisfies each of these QoS criteria, the method moves on to step 760, where the selected path $R_a(i)$ is set as the path $R_s$ selected for providing aggregation of backhaul bandwidth together with the existing path $R_c$. However, in the illustrated example, if the selected path $R_a(i)$ fails to satisfy one or more of these QoS criteria, the method moves on to step 770, where $i$ is incremented. If, at step 780, $i$ exceeds the number of paths within the set $R_a$, indicating that all paths within the set have been assessed without one satisfying the QoS criteria, the method moves on to step 790 and it is determined that no multi-path routing options are available. However, if the value $i$ is less than the number of paths within the set $R_a$, the method loops back to step 740 and the next path $R_a(i)$ within the set $R_a$ is selected.

Although not illustrated in FIG. 7, $E(R_i(j))$ has been defined as a penalty count for a path $R_i(j)$ which may be incremented by 1 whenever a multi-path set with a path $R_i(j)$ included does not provide an appropriate solution for the bandwidth aggregation problem. This parameter may also be decreased by 1 when a multi-path set including $R_i(j)$ provides a good solution for an encountered bandwidth aggregation problem. Since paths are collections of nodes whose wireless interfaces form the links from which these paths are composed, the explained penalization process corresponds to penalization of collections of WMN nodes which may be used in ON overlay creation.

Thus, referring back to FIG. 6, the third task 650 in the illustrated example comprises two main parts. In the first one 720, paths, which are link disjoint (with regard to the $l_b$) with the current path, are determined. Next, candidate paths are examined with respect to QoS constraints and aggregated backhaul bandwidth at 750, which they can achieve in cooperation with the current path for $AP_i$. Paths, which are selected as solutions for the previous bandwidth aggregation problems for AP$_i$, are evaluated by the measured performance of the selected solution.

In some example embodiments it is contemplated that, during a system's lifetime, machine learning algorithms within the WMN management system 110 may derive knowledge about which situations can be resolved by the creation of an opportunistic network overlay and which cannot. This knowledge can speed up the decision making process and suitability determination. For example, those paths which do not result in satisfying performance (e.g. they are unstable, interference is increased, necessary aggregation is not achieved, etc.) are penalized with incremented $E(R_i(j))$. On the other hand the penalty for a selected path may be decreased (until 0 is reached) when a provided solution results as expected. When a certain threshold in a penalty is reached, the path will not be taken into account as a solution for a problem. A high penalty value (e.g. greater than or equal to the threshold) may be provided with a cool-down period (e.g. a certain number of executions of the algorithm) after which it is decreased to a value of $E_t$-1 in order to give the problematic path a new chance to prove its value. This described process of penalization is in line with the reinforced learning paradigm. In the illustrated example, the first path satisfying all of the constraints and requirements is selected as a solution 760 in order to provide faster decision making. To achieve fairness in path selection, a set of all available paths for $AP_i$ may be randomly shuffled before the algorithm is executed. In this way, all appropriate paths may be tested as a solution.

If no multi-path solutions are available, at step 660, the method moves on to step 670 and determines that the creation of an opportunistic network overlay to provide a multi-path routing solution is inappropriate.

In the illustrated example, the suitability determination tasks execution sequence 600 facilitates the fastest possible decision making. This is achieved by starting the suitability determination with the first task 610 which is the least demanding in terms of execution time. Determinations associated with the second task 630 are somewhat more demanding. Nevertheless the most demanding determination is left for the third task 650 which is performed only if the previous two tasks return positive outcome and warrant further engagement of computational resources.

Referring back to FIG. 5, if at any stage within the process 600 of FIG. 6 it is determined that the creation of an opportunistic network overlay is inappropriate, the method loops back to 530 where the current, standard single path routing is maintained. However, if a multi-path solution is available, at step 521, the method moves on to step 540, where the opportunistic network overlay is created by setting up the path $R_s$ selected for providing aggregation of backhaul bandwidth together with the existing path $R_c$ to implement the multi-path solution. This additional path $R_s$ may be setup by amending address tables of the OLSR protocol.

For the illustrated example, when the opportunistic network overlay is created in this manner, a maintenance phase 550, 551 and 560 starts. For example, the WMN management system 110 may continue to monitor the WMN 105 and the created opportunistic overlay. If the aggregated backhaul bandwidth, provided by the current multiple path set ($R_s + R_c$), no longer satisfies the requirements, a new suitability determination phase can start in the background in order to come up with new multi-path solution. The opportunistic network overlay may thus be terminated, at step 570, after the need for aggregated backhaul traffic ceases to exist and the corresponding router(s) may be return into single path mode of operation.

The invention may be implemented in a computer program for running on a computer system, at least including code portions for performing steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on computer readable storage medium or transmitted to the computer system via a computer readable transmission medium. All or some of the computer program may be provided on computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; non-volatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

In the foregoing specification, the invention has been described with reference to specific examples of embodiments of the invention. It will, however, be evident that various modifications and changes may be made therein without departing from the broader spirit and scope of the invention as set forth in the appended claims.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected', or 'operably coupled', to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an', as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an'. The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1. A wireless network management system arranged to, upon detection of at least one trigger event within at least one wireless network, create at least one opportunistic network overlay across a plurality of sub-networks within the at least one wireless network in response to the at least one detected trigger event.

2. The wireless network management system of Claim 1, wherein the wireless network management system is arranged to create at least one opportunistic network overlay across a plurality of sub-networks within the at least one wireless network upon detection of at least one trigger event comprising at least one from a group comprising:

   at least one detected pattern in a network behaviour within the at least one wireless network;
   at least one contextual parameter exceeding a predefined threshold value;
   a current network status for at least a part of the wireless network; and
   at least one resource request from at least one end user device.

3. The wireless network management system of Claim 1 or Claim 2, wherein the wireless network management system is arranged to, upon detection of at least one trigger event within the at least one wireless network, determine a suitability of the creation of an opportunistic network overlay in response to the at least one detected trigger event, and to create at least one opportunistic network overlay across a plurality of sub-networks within the at least one wireless network in response to the at least one detected trigger event if it is determined that such an opportunistic network overlay is suitable.

4. The wireless network management system of Claim 3, wherein the wireless network management system is arranged to determine the suitability of the creation of an opportunistic network overlay based at least partly on at least one from a group comprising:

   a traffic type;
   a topology of the at least one wireless network; and
   a determination of an availability of a suitable multipath configuration.

5. The wireless network management system of Claim 4, wherein the wireless network management system is arranged to determine an availability of a suitable multipath configuration based at least partly on:

   identifying at least one bottleneck link within at least one existing path within the at least one wireless network; and
   deriving a set of candidate opportunistic paths comprising link disjoint paths with respect to the at least one identified bottleneck link.

6. The wireless network management system of Claim 5, wherein the wireless network management system is arranged to determine an availability of a suitable multipath configuration further based at least partly on identifying whether at least one candidate opportunistic path from within the derived set of candidate opportunistic paths comprising link disjoint paths with respect to the at least one identified bottleneck link satisfies at least one quality of service criterion.

7. The wireless network management system of Claim 6, wherein the wireless network management system is arranged to determine an availability of a suitable multipath configuration further based at least partly on identifying whether at least one candidate opportunistic path from within the derived set of candidate opportunistic paths comprising link disjoint with respect to the at least one identified bottleneck link satisfies at least one quality of service criterion from a group of quality of service criteria comprising at least one from a group comprising:

   a path delay parameter for the candidate opportunistic path is less than a timing constraint threshold value;
   a path probability parameter for the candidate opportunistic path is greater than a probability threshold value;
   a combined bandwidth capacity of the candidate opportunistic path and the existing path comprising the bottleneck link is greater than a required bandwidth; and
   a penalty count parameter for the candidate opportunistic path is less than a penalty count threshold value.

8. The wireless network management system of any of Claims 3 to 6, wherein the wireless network management system is arranged not to create an opportunistic network overlay in response to the detection of the at least one trigger event if no suitable candidate opportunistic path is available.

9. The wireless network management system of any preceding Claim, wherein the wireless network management system is arranged to create at least one opportunistic network overlay across a plurality of sub-networks within the at least one wireless network by configuring at least one wireless network node to create at least one opportunistic bridging link between a plurality of sub-networks within the at least one wireless network.

10. The wireless network management system of any preceding Claim, wherein the wireless network management system is arranged to, upon cessation of the at least one detected trigger event, terminate the respective at least one opportunistic network overlay from the wireless network.

11. The wireless network management system of any preceding Claim, wherein the wireless network management system is further arranged to gather and analyse contextual data from across the at least one wireless network.

12. The wireless network management system of Claim 10, wherein the contextual data comprises at least one from a group comprising:

> spatial and temporal user request distribution; and
> traffic patterns within the at least one wireless network.

13. A wireless network system comprising at least one wireless network management system according to any of the preceding Claims.

14. A method of managing a wireless network, the method comprising, upon detection of at least one trigger event within the at least one wireless network, creating at least one opportunistic network overlay across a plurality of sub-networks within the at least one wireless network in response to the at least one detected trigger event.

15. A non-transitory computer program product having executable program code stored therein for programming signal processing logic to perform a method managing a wireless network, the method comprising, upon detection of at least one trigger event within the at least one wireless network, creating at least one opportunistic network overlay across a plurality of sub-networks within the at least one wireless networkin response to the at least one detected trigger event.

**FIG. 1**

**FIG. 2**

**FIG. 3**

400

TRIGGER
DETECTION          410

ON SUITABILITY
DETERMINATION      420

ON CREATION        430

ON
MAINTENANCE        440

ON
TERMINATION        450

# FIG. 4

500

```
                    ┌─────────────────┐
                    │     TRIGGER     │⌇ 510
                    │   ASSESSMENT    │
                    └─────────────────┘
                             │
                          ╱─────╲        ⌇ 511
                        ╱MULTIPATH╲
                       ╱ ROUTING   ╲─── NO ───┐
                       ╲  NEEDED?  ╱           │
                        ╲─────────╱            │
                             │                 │
                            (1)                │
                                               │
  ┌──────────────┐          │   ⌇ 520         │
  │   STANDARD   │⌇530 ┌─────────────────┐    │
  │  SINGLEPATH  │     │   SUITABILITY   │    │
  │   ROUTING    │     │  DETERMINATION  │    │
  └──────────────┘     └─────────────────┘    │
         ↑                     │              │
         │                  ╱─────╲     ⌇521 │
         └──── NO ────────╱SUITABLE?╲         │
                          ╲─────────╱         │
                               │              │
                     ┌─────────────────┐ ⌇540│
                     │ SETUP MULTIPLE  │     │
                     │     PATHS       │     │
                     └─────────────────┘     │
                               │             │
                     ┌─────────────────┐ ⌇550│
                     │     TRIGGER     │     │
              ┌─────→│   ASSESSMENT    │     │
              │      └─────────────────┘     │
              │            │                 │
         ╱─────────╲    ╱─────────╲    ⌇551 │
        ╱   NEW     ╲  ╱MULTIPATH  ╲        │
       ╱ MULTIPATH   ╲←── YES ──╱ ROUTING   ╲│
       ╲   SET      ╱ ⌇560    ╲  NEEDED?  ╱ │
        ╲ NEEDED?  ╱            ╲─────────╱  │
         ╲────────╱                  │       │
              │               ┌─────────────────┐⌇570
            YES               │ CONTINUE WITH   │  │
              │               │  SINGLE PATH    │  │
             (1)              │    ROUTING      │──┘
                              └─────────────────┘
```

# FIG. 5

600

```
┌─────────────────┐
│  TRAFFIC TYPE   │╶─ 610
│     CHECK       │
└─────────────────┘
         │
         ▼
      ╱╲
     ╱    ╲
    ╱TRAFFIC╲╶─ 620     NO
   ╲  TYPE   ╱──────────────────┐
    ╲VALID? ╱                    │
     ╲    ╱                      │
      ╲╱                         │
       │                         │
       ▼                         │
┌─────────────────┐              │
│   TOPOLOGY      │╶─ 630        │
│    CHECK        │              │
└─────────────────┘              │
         │                       │
         ▼                       │
      ╱╲                         ▼
     ╱    ╲              ┌──────────────┐╶─ 670
    ╱TOPOLOGY╲╶─ 640  NO │              │
   ╲ VALID? ╱────────────│  UNSUITABLE  │
    ╲      ╱             │              │
     ╲    ╱              └──────────────┘
      ╲╱                       ▲
       │                       │
       ▼                       │
┌─────────────────┐            │
│   MULTIPATH     │╶─ 650      │
│     CHECK       │            │
└─────────────────┘            │
         │                     │
         ▼                     │
      ╱╲                       │
     ╱    ╲                    │
    ╱MULTIPATH╲╶─ 660    NO    │
   ╲AVAILABLE ╱────────────────┘
    ╲   ?    ╱
     ╲    ╱
      ╲╱
       │
       ▼
```

# FIG. 6

700

INITIALIZE SETS $R_a$, $R_s$ AS EMPTY — 710

FIND $R_a$ CONSISTING OF LINK DISJOINT PATHS WITH RESPECT TO $l_b$ — 720

730
LENGTH $(R_a)=0$? —— YES

740
INITIALIZE $i=1$ SELECT PATH $i$ FROM $R_a$

780
$i >$ LENGTH$(R_a)$ ? —— YES

770
$i=i+1$

790
UNSUITABLE

750
$T(R_a(i)) \geq T_c$ OR $P(R_a(i)) \leq P_c$ OR $AC(R_a(i)) + AC(R_s) < AC_c$ OR $E(R_a(i)) > E_t$? —— YES

760
SOLUTION $R_s = R_a(i)$

**FIG. 7**

Europäisches
Patentamt

European
Patent Office

Office européen
des brevets

# EUROPEAN SEARCH REPORT

Application Number

EP 12 18 1759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARIOS LOGOTHETIS ET AL: "Deriving Policies Based on the Evaluation of the Suitability of Integrating Opportunistic Networks with Wireless Infrastructures", VEHICULAR TECHNOLOGY CONFERENCE (VTC FALL), 2011 IEEE, IEEE, 5 September 2011 (2011-09-05), pages 1-5, XP032029700, DOI: 10.1109/VETECF.2011.6093216 ISBN: 978-1-4244-8328-0 | 1-4, 13-15 | INV. H04W4/02 H04L12/24 H04W24/02 |
| Y | * page 1, left-hand column, line 1, paragraph I - page 2, left-hand column, line 2 * * page 2, left-hand column, line 3, paragraph II - right-hand column, line 37, paragraph III * * figure 1 * * page 4, right-hand column, line 1, paragraph VI - page 5, right-hand column, line 5, paragraph VII * | 5-12 | |

-----

-/--

TECHNICAL FIELDS SEARCHED (IPC)

H04W
H04L

The present search report has been drawn up for all claims

| Place of search | Date of completion of the search | Examiner |
|---|---|---|
| Munich | 23 October 2012 | Avilés Martinez, M |

EPO FORM 1503 03.82 (P04C01)

Europäisches
Patentamt
European
Patent Office
Office européen
des brevets

## EUROPEAN SEARCH REPORT

**Application Number**

EP 12 18 1759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANDREAS GEORGAKOPOULOS ET AL: "Opportunistic networks for efficient application provisioning in the Future Internet: Business scenarios and technical challenges", FUTURE NETWORK&MOBILE SUMMIT (FUTURENETW), 2011, IEEE, 15 June 2011 (2011-06-15), pages 1-8, XP032030961, ISBN: 978-1-4577-0928-9 | 5-12 | |
| A | * abstract * * page 2, line 1, paragraph 2 - line 10 * * page 3, line 1, paragraph 3.2 - line 17 * * figure 2 * * page 4, line 1, paragraph 3.4 - page 5, line 6, paragraph 4.1 * * page 6, paragraph 4.4 * | 1-4, 13-15 | |
| A | ----- "Reconfigurable Radio Systems (RRS); Feasibility Study on Control Channels for Cognitive Radio Systems", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. RRS 3, no. V1.1.1, 1 April 2012 (2012-04-01), XP014069746, * abstract * * page 14, paragraph 5.2 - page 15, paragraph 5.2.1 * * page 19, paragraph 6.1 - page 25, paragraph 6.2.4.3.2 * ----- | 1-15 | **TECHNICAL FIELDS SEARCHED (IPC)** |

-/--

The present search report has been drawn up for all claims

| Place of search | Date of completion of the search | Examiner |
|---|---|---|
| Munich | 23 October 2012 | Avilés Martinez, M |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

# EUROPEAN SEARCH REPORT

Application Number

EP 12 18 1759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREAS GEORGAKOPOULOS ET AL: "Specification and assessment of a fitness function for the creation of opportunistic networks", FUTURE NETWORK&MOBILE SUMMIT (FUTURENETW), 2011, IEEE, 15 June 2011 (2011-06-15), pages 1-8, XP032030957, ISBN: 978-1-4577-0928-9 * abstract * * page 1, line 1, paragraph 1 - page 2, line end, paragraph 3 * * page 4, line 1, paragraph 4 - page 5, line 7 * * figure 2 * * figure 3 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 23 October 2012 | Avilés Martinez, M |

EPO FORM 1503 03.82 (P04C01)

**EP 2 701 408 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. AKYILDIZ ; X. WANG ; W. WANG.** Wireless mesh networks: a survey. Elsevier Computer networks, 2005, vol. 47, 445-487
- **C. PERKINS ; E. BELDING-ROYER ; S. DAS.** Ad hoc on-demand distance vector routing. *IETF RFC 3561,* 2003
- **D. JOHNSON ; Y. HU ; D. MALTZ.** The dynamic source routing protocol for mobile ad hoc networks for IPv4. *IETF RFC 4728,* 2007
- D4.4 - Design and prototype implementation of QoS routing. *EU-MESH, FP7 ICT no. 215320,* 2010
- **Y. YANG ; J. WANG ; R. KRAVETS.** Designing routing metric for mesh networks. *IEEE Workshop on wireless mesh networks,* 2005

- **A. A. PIRZADA ; R. WISHART ; M. PORTMANN.** Congestion aware routing in hybrid wireless mesh networks. *IEEE International conference on networks ICON,* 2007, 513-518
- **A. A. BHORKAR ; T. JAVIDI ; A. SNOEREN.** A practical approach for achieving congestion diversity in wireless ad hoc networks. *Allerton conference on communication, control and computing,* 2010
- **CONTI, M. ; GIORDANO, S. ; MAY, M. ; PASSARELLA, A.** From Opportunistic Networks to Opportunistic Computing. *IEEE Communications Magazine,* 2010, vol. 48 (9), 126-139

23